# EUROPÄISCHE PATENTANMELDUNG

(11) **EP 2 660 217 A1**
(43) Veröffentlichungstag der Anmeldung: **06.11.2013**
(21) Anmeldenummer: 12166513.7
(22) Anmeldetag: 03.05.2012
(51) Int. Cl.: C04B 7/52, C04B 24/12, C04B 40/00

(54) **Mahlhilfsmittel für mineralische Bindemittel**

(71) Anmelder: Construction Research & Technology GmbH, 83308 Trostberg (DE)
(72) Erfinder: Stefan, Madalina Andreea, 83308 Trostberg (DE); Freund, Torsten, 67117 Limburgerhof (DE); Ambrosini, Lorenzo, 8105 Oberengstringen (CH); Camplone, Attilio, 65126 Pescara (IT); Brughmans, Stijn, 67063 Ludwigshafen (DE); Faderl, Jürgen, 68549 Ilvesheim (DE)

(57) **Zusammenfassung**

Die Erfindung betrifft ein Verfahren zur Mahlung eines anorganischen Feststoffs aus der Reihe Zementklinker, Puzzolan und/oder Rohstoff für die Zementherstellung, wobei vor oder während der Mahlung ein Mahlhilfsmittel zugesetzt wird und das Mahlhilfsmittel, bezogen auf die Trockenmasse, 6 bis 80 Gew.-% Caprolactam und 1,5 bis 30 Gew.-% Aminocapronsäure umfasst, wobei, jeweils bezogen auf die Trockenmasse, 0,002 bis 2 Gew.-% des Mahlhilfsmittels, bezogen auf den gesamten Feststoff, eingesetzt wird. Weiterhin werden ein Mahlhilfsmittel und dessen Verwendung zur Erhöhung der Druckfestigkeit des daraus hergestellten, gehärteten Erzeugnisses beansprucht.

## Beschreibung

Die Erfindung betrifft ein Verfahren zur Mahlung eines anorganischen Feststoffs aus der Reihe Zementklinker, Puzzolan und/oder Rohstoff für die Zementherstellung, ein Mahlhilfsmittel sowie dessen Verwendung.

Als hydraulisch werden Stoffe angesehen, die sowohl an der Luft als auch unter Wasser erhärten und wasserbeständig sind. Insbesondere handelt es sich bei hydraulischen Bindemitteln um Zement und Puzzolane, wie etwa Flugasche, Hochofenschlacke und Trass.

Zement hat unter den hydraulischen Bindemitteln die größte wirtschaftliche Bedeutung. Mit Wasser angemacht ergibt Zement Zementleim, der durch Hydratation erstarrt und erhärtet und der auch nach dem Erhärten unter Wasser fest und raumbeständig bleibt. Zement besteht im Wesentlichen aus Portlandzementklinker und kann weiterhin beispielsweise Hüttensand, Puzzolan, Flugasche, Kalkstein, Füller und Zementzusatzmittel enthalten. Die Zementbestandteile müssen hinsichtlich ihrer Zusammensetzung statistisch betrachtet homogen sein, was insbesondere durch adäquate Mahl- und Homogenisierungsverfahren erreicht werden kann.

Trotz zahlreicher Entwicklungen in der Mahltechnologie wird der größte Teil des Zements und ein Teil der Rohstoffe für die Zementherstellung immer noch in Rohr-Kugelmühlen gemahlen, bei denen dem Effekt von Mahlhilfsmitteln eine besondere Bedeutung zukommt.

Für die Klinkerherstellung werden in der Regel die Zement Rohstoffe trocken vermahlen. Bei der trockenen Aufbereitung werden die Rohmaterialkomponenten über Dosiereinrichtungen einer Mühle in einem bestimmten Mischungsverhältnis aufgegeben und zu Rohmehl feingemahlen. Eine gute Mahlung der Rohstoffe ist entscheidend für die gute Klinkerqualität. Nach der Klinkerherstellung wird der Klinker alleine oder mit anderen Zementzusatzstoffen (SCM - supplementary cementicious materials) wieder gemahlen.

Mahlhilfsmittel haben insbesondere die Aufgabe bei der Zementklinker- oder Kalksteinmahlung, aber auch bei Puzzolanen und weitern Rohstoffen für die Zementherstellung, eine höhere Mahlfeinheit des Mahlgutes zu ermöglichen und die Agglomeration in der Mühle zu verhindern.

Mahlhilfsmittel wirken durch Ummantelung der zu Agglomeration neigenden Partikel mit dünnen, insbesondere monomolekularen Schichten und führen damit zu einer Neutralisation der Oberflächenladungen. Physikalisch gesehen liefern die Mahlhilfsmittel rasch Ladungsträger, die zum Absättigen der während des Bruchs der Klinkerpartikel auf den Bruchflächen entstehenden Ladungen zur Verfügung stehen und dadurch die Agglomerationsneigung reduzieren. Außerdem werden Mahlhilfsmittel auf den Bruchflächen der noch nicht separierten Körner absorbiert und verhindern deren Rückvereinigung. Die mechanistische Wirkungsweise von Mahlhilfsmitteln wird beispielsweise in "Proceedings of 11th ICCC 2003", Vol 2, Seite 1636 beschrieben.

Die Wirksamkeit bekannter Mahlhilfsmittel ist sehr unterschiedlich. Die Zugabemenge von Mahlhilfsmitteln, bezogen auf das Mahlgut, liegt typischerweise zwischen 0,02 und 0,3 Gew.-%. Zu den bekannten Mahlhilfsmitteln zählen beispielsweise Glykole, insbesondere Mono-, Di-, Tri- und Polyglykole, Polyalkohole wie etwa Glycerin, Alkanolamine, insbesondere Triethanolamin und Triisopropanolamin, organische Säuren, insbesondere Essigsäure oder deren Salze, Aminosäuren, Molasse sowie organische und anorganische Salze, insbesondere auf Basis von Acetat, Formiat, Gluconat, Chlorid, Fluorid, Nitrat und Sulfat.

In der Praxis erfolgt die Auswahl eines geeigneten Mahlhilfsmittels dahingehend, daß eine Optimierung insbesondere folgender Kenngrößen angestrebt wird: Verhinderung von Anbackungen im Mahlaggregat, Erzielung einer möglichst hohen Mahlfeinheit beziehungsweise großen spezifischen Oberfläche des Mahlgutes, Verbesserung der Fließfähigkeit des Mahlgutes, Homogenisierung des Mahlgutes, Auflösung von Agglomeraten des Mahlgutes und Reduzierung der Mahlprozess-Kosten. Insbesondere in der Endvermahlung von hydraulischen Bindemitteln können Mahlhilfsmittel neben ihrer Wirkung während des Mahlvorgangs auch einen positiven Effekt auf die spätere Härtung und die mechanischen Eigenschaften des Zements haben, was von besonderem Vorteil ist.

Mahlhilfsmittel können somit auch zugefügt werden, um die physikalischen Eigenschaften des fertigen Zements zu ändern. Alkanolamine wie Monoethanolamin, Diethanolamin und Triethanolamin erhöhen die 1-Tag-Druckfestigkeit von Zementen, was auch als Frühfestigkeit bezeichnet wird. Diese Additive haben jedoch wenig vorteilhafte Wirkungen auf die 28-Tage-Abbindefestigkeit des fertigen Zements und können diese in einigen Fällen sogar herabsetzen. Dieses Verhalten ist von V. Dodson, in "Concrete Admixtures", Van Reinhold, New York, 1990, beschrieben worden.

US-A-4 990 190, US-A-5 017 234 und US-A-5 084 103 beschreiben, dass bestimmte höhere Trihydroxyalkylamine, wie Triisopropanolamin und N,N-Bis(2-hydroxyethyl)-2-hydroxypropylamin die Spätfestigkeit nach 28 Tagen nach der Herstellung des Nasszementgemisches von Portlandzement verbessern. Die in diesen Patenten beschriebenen, festigkeitserhöhenden höheren Trihydroxyalkylamin-Additive werden als besonders brauchbar in gemischten Zementen beschrieben.

Obwohl Triisopropanolamin in der Lage ist, die Spätfestigkeitseigenschaften von Zementzusammensetzungen zu verbessern, kann es nur sehr begrenzt die Frühfestigkeit verbessern. Überraschender ist die Beobachtung, dass es dazu neigt, die in den Zement eingetragene Luftmenge zu erhöhen. Um die Frühfestigkeit, und die Lufteintrageigenschaften der abgebundenen Zementzusammensetzung zu verbessern, welche Triisopropanolamin enthält, haben Myers et al. das Einbringen bekannter Frühfestigkeitserhöhungsmittel und Abbindebeschleuniger, wie Triethanolamin oder Alkalimetallsalze, und bekannter Luftaustragmittel gelehrt, wie jener, die in US-A-5 156 679 beschrieben sind.

Obwohl die Einbringung von Luftaustragmitteln in Triisopropanolamin enthaltenden Zementzusammensetzungen die Luftgehalte herabsetzen konnte, konnte sie die Bildung und Freisetzung von Blasen aus den Zementzusammensetzungen nicht reduzieren oder beseitigen. Dieses Auftreten kann zu abgebundenen Zementzusammensetzungen mit großer Porosität und schlechten fertigen Oberflächen führen.

Hocherwünscht wäre somit ein Additiv, das die Festigkeitseigenschaften in allen Alterungsstufen verbessern kann, ohne große Luftporen einzutragen. Dies ist erwünscht, da es zu hydraulische Bindemittel enthaltende Zusammensetzungen, wie Portlandzementbeton, mit niedrigen Porositäten und besseren fertigen Oberflächen führen kann.

Da es sich bei Zement um Massenware handelt, spielen die Herstellungskosten eine entscheidende Rolle. Bereits relative geringe Einsparungen bei Rohstoffen oder Energie können einen erheblichen Einfluss auf die Wirtschaftlichkeit des Prozesses haben.

Aufgabe der vorliegenden Erfindung war es deshalb Mahlhilfsmittel zur Verfügung zu stellen, welche zum einen sehr gute Eigenschaften als Mahlhilfsmittel für einen anorganischen Feststoff aus der Reihe Zementklinker, Puzzolan und/oder Rohstoff für die Zementherstellung aufweisen. Insbesondere sollte eine Verringerung der aufgewendeten Energie bei gleichem Mahlergebnis erreicht werden. Weiterhin sollten das Mahlhilfsmittel bei Zementklinker und Puzzolanen die Festigkeitseigenschaften in allen Alterungsstufen verbessern und somit beim Härten nicht nur eine sehr gute Frühfestigkeit nach einem Tag, sondern auch eine hohe Spätfestigkeit nach 28 Tagen erzeugen.

Gelöst wurde diese Aufgabe durch ein Verfahren zur Mahlung eines anorganischen Feststoffs aus der Reihe Zementklinker, Puzzolan und/oder Rohstoff für die Zementherstellung, wobei vor oder während der Mahlung ein Mahlhilfsmittel zugesetzt wird, wobei das Mahlhilfsmittel, bezogen auf die Trockenmasse, 6 bis 80 Gew.-% Caprolactam und
1,5 bis 30 Gew.-% Aminocapronsäure umfasst,
wobei, jeweils bezogen auf die Trockenmasse, 0,002 bis 2 Gew.-% des Mahlhilfsmittels, bezogen auf den gesamten anorganischen Feststoff, eingesetzt wird.

Überraschend wurde gefunden, dass die mit dem erfindungsgemäßen Mahlhilfsmittel vermahlenen Produkte eine verminderte Agglomerationsneigung, also einen guten pack-set aufweisen, was sich auch positiv auf die Mahlbarkeit und die Dispergiereigenschaften auswirkt. Ein sehr guter "pack set" hat insbesondere zur Folge, dass die hergestellten Produkte sehr leicht fließfähig sind, was beispielsweise bei der Lagerung in Silos erwünscht ist.

Die erfindungsgemäßen Mahlhilfsmittel zeigen weiterhin bei der Vermahlung eine sehr bei Zementklinker, Puzzolan als auch Rohstoffen sowohl verringernund gute Wirkung ie D. i gleichem Mahlergebnis Energie bedie aufzuwendender die Zementherstellung ü f bei Zement und weiterhinst, wobeiölge in vollem Umfang somit wirdte Aufgabel gestel hfestigkeit üsowohl eine sehr gute Fr Puzzolanen nach dem Anmachen mit Wasser Tagen erreicht 28tfestigkeit nach ävorragende Spr nach einem Tag als auch eine he □. wird

Bevorzugt kann das erfindungsgemäße Mahlhilfsmittel mindestens ein weiteres Mahlhilfsmittel aus der Reihe Polycarboxylatether, Ligninsulfonat, Melaminformaldhydsulfonat, Naphtalinformaldehydsulfonat, Mono-, Di-, Tri- und Polyglykole, Polyalkohole, Alkanolamin, Aminosäuren, Zucker, Molasse sowie organische und anorganische Salze umfassen.

Insbesondere kann das Mahlhilfsmittel 3 bis 70 Gew.-% mindestens eines Alkanolamins oder Alkanolaminsalzes umfassen. In diesem Zusammenhang kann es sich bei dem mindestens einen erfindungsgemäßen Alkanolamin um Monoethanolamin, Diethanolamin, Triethanolamin, Monoisopropanolamin, Diisopropanolamin, Triisopropanolamin, Diethanolisopropanolamin, Ethanoldiisopropanolamin, Hydroxyalkyl-substituierte Ethylenpolyamine, Hydroxyalkyl-substituierte Alkyldiamine, insbesondere Dihydroxyethylethylendiamin, Trihydroxyethylethylendiamin, Tetrahydroxyethylethylendiamin, Dihydroxypropylethylendiamin, Trihydroxypropylethylendiamin, Tetrahydroxypropylethylendiamin, Polyhydroxyalkyl-substituiertes Polyethylenamin, Poly(hydroxyethyl)polyethylenimin, N,N-Bis(2-hydroxyethyl)-2-propanolamin und N,N-Bis(2-hydroxypropyl)-N-(hydroxyethyl)amin, N,N,N',N'-Tetra-(2-hydroxyethyl)-ethylendiamin, N,N,N',N'-Tetra-(2-hydroxypropyl)-ethylendiamin und Methyldiethanolamin handeln. Besonders bevorzugt sind Triisopropanolamin und Triethanolamin. Weiterhin können die genannten Alkanolamine als Salz vorliegen, besonders bevorzugt handelt es sich um organische Anionen, insbesondere Formiat, Acetat und Propionat.

Bei dem Rohstoff für die Zementherstellung kann es sich insbesondere um mindestens einen aus der Reihe Kalkstein, Kalksteinmergel, Ton, Kreide, Quarzsand und Eisenerz handeln.

Unter dem Begriff Zementklinker werden im vorliegenden Dokument insbesondere Portlandzementklinker aber auch Bindemittel verstanden, die unter Wasser abbinden, respektive erhärten, wie beispielsweise hydraulischer Kalk. Weiterhin sind unter dem Begriff Zementklinker im Sinne der vorliegenden Erfindung auch latent hydraulische Bindemittel zu verstehen, die erst durch Einwirkung von Zusätzen, sogenannten Anregern, abbinden, respektive erhärten, wie beispielsweise Hüttensand.

Unter dem Begriff Puzzolane im Sinne der vorliegenden Erfindung werden Bindemittel verstanden, die nicht selbstständig abbinden, sondern nach Feuchtlagerung durch das Entstehen von Calciumhydroxid festigkeitsbildende Reaktionsprodukte liefern, wie beispielsweise Flugasche, Hochofenschlacke, Mikrosilika, sowie natürliche Puzzolane, wie z. B. Trass und Metakaolin. Weitere nicht selbständig abbindende Puzzolane können Aschen aus der Verbrennung von Naturprodukten sein, wie beispielsweise Reisschalen und Kornspelzen.

In einer bevorzugten Ausführungsform wird, bezogen auf die Trockenmasse, 0,01 bis 0,5 Gew.-%, insbesondere 0,01 bis 0,2 Gew.-% des erfindungsgemäßen Mahlhilfsmittels, bezogen auf den anorganischen Feststoff, eingesetzt. Das erfindungsgemäße Mahlhilfsmittel wird in einer speziellen Ausführungsform der zu vermahlenden Zusammensetzung vor dem Mahlen zugegeben und anschließend vermahlen. Grundsätzlich kann die Zugabe des erfindungsgemäßen Mahlhilfsmittels aber auch während des Mahlprozess erfolgen. Bevorzugt ist jedoch die Zugabe vor dem Mahlen.

Handelt es sich bei der zu vermahlenden Zusammensetzung um Zementklinker, kann die Zugabe vor, während oder nach der Zugabe von Gips und gegebenenfalls anderen Zumahlstoffen, wie beispielsweise Kalkstein, Hochofenschlacke, Flugasche oder Puzzolanen, erfolgen. Das erfindungsgemäße Mahlhilfsmittel kann auch für die Herstellung von Mischzementen verwendet werden. Hierzu können individuelle Zemente, die jeweils separat durch Mahlung hergestellt werden, gemischt werden, wobei mindestens einer der individuellen Zemente mit dem erfindungsgemäßen Mahlhilfsmittel vermahlen wird oder es wird eine Mischung von mehreren Zementklinkern mit dem erfindungsgemäßen Mahlhilfsmittel gemahlen, um einen Mischzement zu erhalten.

Das erfindungsgemäße Mahlhilfsmittel wird bevorzugt als wässrige Suspension auf den anorganischen Feststoff aufgebracht. In einer bevorzugten Ausführungsform kann das Mahlhilfsmittel, bezogen auf die Trockenmasse, 1 bis 20 Gew.-% Alkalihydroxid, insbesondere Natriumhydroxid, enthalten. Weiterhin bevorzugt kann das Mahlhilfsmittel Caprolactam-Oligomere umfassen, insbesondere 1 bis 50 Gew.-%.

Insbesondere geeignet als erfindungsgemäße Mahlhilfsmittel sind spezielle Produkte aus der Caprolactam-Herstellung. Derartige spezielle Produkte werden bei der Caprolactamherstellung nach dem Cyclohexanonoxim-Verfahren via Hydroxylamin erhalten (Hans Jürgen Arpe, Industrielle Organische Chemie, 2007 Wiley-VCD, Seite 281). Diese enthalten neben Caprolactam auch Aminocapronsäure. Besonders bevorzugt handelt es sich um ein Produkt der Caprolactamherstellung, enthaltend bezogen auf die Trockenmasse 6 bis 80 Gew.-% Caprolactam, 2 bis 20 Gew.-% Oligomere des Caprolactams, 1,5 bis 30 Gew.-% Aminocapronsäure, 1 bis 20 Gew.-% Alkalihydroxid sowie ggf. bis zu 20 Gew.-% weitere organische Bestandteile

Der Mahlprozess erfolgt üblicherweise in einer Kugelmühle. Es können aber grundsätzlich auch andere Mühlen, wie sie in der Zementindustrie bekannt sind, eingesetzt werden. In einer bevorzugten Ausführungsform wird die Mahlung in einer Walzenschüsselmühle durchgeführt.

Je nach Mahldauer verfügt der Zement über unterschiedliche Feinheit. Die Feinheit von anorganischen Feststoffs wird typischerweise nach Blaine in cm²/g angegeben. Die Feinheit als auch die Partikelgrößenverteilung ist in der Praxis von großer Relevanz. Solche Partikelgrößenanalysen werden üblicherweise durch Lasergranulometrie oder Luftstrahlsiebe ermittelt. Durch den Einsatz der erfindungsgemäßen wässrigen Mahlhilfsmittel kann die Mahlzeit zur Erreichung der gewünschten Feinheit anorganischen Feststoffs aus der Reihe Zementklinker, Puzzolan und/oder Rohstoff für die Zementherstellung deutlich reduziert werden. Durch die dadurch reduzierten Energiekosten ist der Einsatz dieser Mahlhilfsmittel wirtschaftlich sehr interessant. Aus den erfindungsgemäß erhaltenen Produkten können verschiedenste Folgeprodukte herstellt werden, insbesondere solche nach DIN EN 197-1 klassierte Zemente CEM-1 (Portlandzement), CEM II und CEM III (Hochofenzement). Bevorzugt ist CEM-I.

Es konnte weiterhin festgestellt werden, dass bei der Verwendung der erfindungsgemäßen Mahlhilfsmittel bei Zementklinker oder Puzzolanen kein oder nur geringer Lufteintrag erfolgt, während dieser bei der Verwendung von reinen Triisopropanolamin als Mahlhilfsmittel äußerst stark vorhanden ist.

Ein weiterer Gegenstand der vorliegenden Erfindung ist ein anorganischer Feststoff aus der Reihe, Zementklinker, Puzzolan und/oder Rohstoff für die Zementherstellung, hergestellt nach dem erfindungsgemäßen Verfahren.

Des Weiteren sieht die vorliegende Erfindung die Verwendung einer Mischung enthaltend, bezogen auf die Trockenmasse, 6 bis 80 Gew.-% Caprolactam und 1,5 bis 30 Gew.-% Aminocapronsäure als Mahlhilfsmittel für einen anorganischen Feststoff aus der Reihe, Zementklinker, Puzzolan und/oder Rohstoff für die Zementherstellung vor, wobei, jeweils bezogen auf die Trockenmasse, 0,002 bis 2 Gew.-% des Mahlhilfsmittels, bezogen auf den anorganischen Feststoff, eingesetzt wird, zur Verringerung der aufgewendeten Energie bei gleichem Mahlergebnis sowie zur Verringerung der Agglomerationsneigung des erhaltenen Produkts.

Weiterhin betrifft die vorliegende Erfindung ein Mahlhilfsmittel für eine ein hydraulisches Bindemittel enthaltende Zusammensetzung, enthaltend 6 bis 80 Gew.-% Caprolactam, 1,5 bis 30 Gew.-% Aminocapronsäure und 3 bis 70 Gew.-% mindestens eines weiteren Mahlhilfsmittels aus der Reihe Polycarboxylatether, Ligninsulfonat, Melaminformaldhydsulfonat, Naphtalinformaldehydsulfonat, Mono-, Di-, Tri- und Polyglykole, Polyalkohole, Alkanolamin, Aminosäuren, Zucker, Molasse, organische und anorganische Salze. Besonders bevorzugt handelt es sich bei dem weiteren Mahlhilfsmittel um ein Alkanolamin und/oder ein Alkanolaminsalz.

Insbesondere werden durch die vorliegende Erfindung Mahlhilfsmittel zur Verfügung gestellt, welche eine hervorragende Wirkung während des Mahlvorgangs aufweisen und zwar insbesondere zu einer Verringerung der aufzuwendenden Energie bei gleichem Mahlergebnis führen. Weiterhin hat das vermahlene Produkt eine verminderte Agglomerationsneigung, also einen guten pack-set aufweisen, was insbesondere bei der Lagerung des Produktes von großem Vorteil ist. Hinsichtlich der Mahlung von Zementklinker und Puzzolanen haben die erfindungsgemäßen Mahlhilfsmittel auch einen positiven Effekt auf die spätere Härtung und die mechanischen Eigenschaften des vermahlenen Produktes. Insbesondere wurden die Festigkeitseigenschaften in allen Alterungsstufen nach dem Anmachen mit Wasser verbessert und eine sehr gute Frühfestigkeit nach einem Tag sowie eine hohe Spätfestigkeit nach 28 Tagen erreicht.

Die nachfolgenden Beispiele verdeutlichen die Vorteile der vorliegenden Erfindung

### Beispiele

### Allgemeine Versuchsvorschrift

Die Mahlversuche werden in einer Laborkugelmühle durchgeführt. Eingewogen werden ein Gesamtgewicht von 12,30 kg, enthaltend 307,5 Gramm Anhydrit, die zuvor auf einer Präzisionswaage abgewogen werden, der Rest ist Portlandzementklinker. Bezogen auf dieses Gesamtgewicht werden 200 ppm des Mahlhilfsmittels in der Mühle zugegeben. Anschließend wird die Mahlung für 80 min und bei einer Innentemperatur der Mühle von 120 °C durchgeführt. Der so erhaltene Zement wird zur Abtrennung der Mahlkugeln durch ein 1 mm Sieb gesiebt.

Daraufhin wird gemäß EN 196-1 mit den Zementen ein Mörtel mit einem Wasser/Zement-Verhältnis von 0,5 und einem Sand/Zement-Verhältnis von 3 hergestellt und die Biegezug- sowie die Druckfestigkeit nach eben dieser Norm nach 1, 2, 7 und 28 Tagen (d) geprüft. Des Weiteren wird an diesem Mörtel gemäß EN 196-1 der Luftgehalt und das Ausbreitmaß gemäß EN 413-2 untersucht. Der Luftgehalt wird unmittelbar nach Mischende bestimmt. Das Ausbreitmaß wird unmittelbar nach Mischende und 30 Minuten nach Wasserzugabe ermittelt. Dabei wird abweichend von der Norm der Mörtel in einer Lage in den Trichter eingefüllt und durch Stochern verdichtet.

**Tabelle 1**

| Mahlhilfsmittel | Ausbreitmaß | | Luftgehalt sofort | Druckfestigkeit | | | |
|---|---|---|---|---|---|---|---|
| | 0' | 30' | | 1d | 2d | 7d | 28d |
| keines | 19,8 | 18,6 | 6,10% | 10,43 | 22,62 | 43,32 | 58,28 |
| 200 ppm TIPA | 20,3 | 19 | 8,70% | 9,875 | 21,27 | 47,13 | 61,32 |
| 200 ppm TEA | 20,2 | 19,3 | 5,20% | 13,68 | 25,8 | 46,3 | 61,06 |
| 200 ppm TEA/ erfindungsgemäßes Mahlhilfsmittel "A" (1:1) | 20,1 | 18,7 | 6,50% | 13,86 | 25,59 | 47,75 | 62,26 |

| | | | | | | | |
|---|---|---|---|---|---|---|---|
| TIPA = Triisopropanolamin TEA = Triethanolamin Erfindungsgemäßes Mahlhilfsmittel "A" = Produkt aus der Caprolactam-Herstellung enthaltend 30,2 Gew.-% Caprolactam Monomer, 14,1 Gew.-% Oligomere von Caprolactam, 7 Gew.-% Aminocapronsäure, 26,6 Gew.-% Wasser, 5,2 Gew.-% NaOH sowie 11,9 Gew.-% weitere organische Bestandteile. | | | | | | | |

Die Agglomerationsneigung (pack-set) wird wie folgt gemessen:

Die Proben werden wie in der allgemeinen Versuchsvorschrift beschrieben hergestellt, wobei die in Tabelle 2 jeweils angegebene Menge an Mahlhilfsmittel zugegeben wird. Das nach der Mahlung erhaltene Produkt wird gesiebt (200 µm Maschenweite) und 100 g des erhaltenen Materials auf ein elektromagnetisch betriebenes Rüttelsieb (Hersteller: Matest S.p.A. Unipersonale) gegeben, wobei das Sieb einen Durchmesser von 300 mm und eine Maschenweite von 200 µm aufweist und nicht fest mit dem Rüttler verbunden ist. Nach dem Anschalten des Rüttlers mit 450 Watt Leistung wird die Zeit gemessen, bis die gesamte Probe das Sieb passiert hat.

**Tabelle 2**

| Mahlhilfsmittel | Dosierung Mahlhilfsmittel | Zeit (Sekunden) bis die gesamte Probe das Sieb passiert hat (pack-set) |
|---|---|---|
| keines | 0 ppm | 168 |
| TEA | 500 ppm | 70 |
| Erfindungsgemäßes Mahlhilfsmittel "A" | 500 ppm | 65 |

## Patentansprüche

1. Verfahren zur Mahlung eines anorganischen Feststoffs aus der Reihe Zementklinker, Puzzolan und/oder Rohstoff für die Zementherstellung, wobei vor oder während der Mahlung ein Mahlhilfsmittel zugesetzt wird,
**dadurch gekennzeichnet, dass**
das Mahlhilfsmittel, bezogen auf die Trockenmasse,
6 bis 80 Gew.-% Caprolactam und
1,5 bis 30 Gew.-% Aminocapronsäure umfasst,
wobei, jeweils bezogen auf die Trockenmasse, 0,002 bis 2 Gew.-% des Mahlhilfsmittels, bezogen auf den gesamten anorganischen Feststoff, eingesetzt wird.

2. Verfahren nach Anspruch 1, **dadurch gekennzeichnet, dass** das Mahlhilfsmittel mindestens ein weiteres Mahlhilfsmittel aus der Reihe Polycarboxylatether, Ligninsulfonat, Melaminformaldhydsulfonat, Naphtalinformaldehydsulfonat, Mono-, Di-, Tri- und Polyglykole, Polyalkohole, Alkanolamin, Aminosäuren, Zucker, Molasse, organische und anorganische Salze umfasst.

3. Verfahren nach Anspruch 1, **dadurch gekennzeichnet, dass** das Mahlhilfsmittel 3 bis 70 Gew.-% mindestens eines Alkanolamins oder Alkanolaminsalzes umfasst.

4. Verfahren nach einem der Ansprüche 1 bis 3, **dadurch gekennzeichnet, dass**, jeweils bezogen auf die Trockenmasse, 0,01 bis 0,5 Gew.-% des Mahlhilfsmittels, bezogen auf den anorganischen Feststoff, eingesetzt wird.

5. Verfahren nach einem der Ansprüche 1 bis 4, **dadurch gekennzeichnet, dass** das Mahlhilfsmittel als wässrige Suspension auf den anorganischen Feststoff aufgebracht wird.

6. Verfahren nach einem der Ansprüche 1 bis 5, **dadurch gekennzeichnet, dass** das Mahlhilfsmittel vor der Mahlung aufgebracht wird.

7. Verfahren nach einem der Ansprüche 1 bis 6, **dadurch gekennzeichnet, dass** das Mahlhilfsmittel, bezogen auf die Trockenmasse, 1 bis 20 Gew.-% Alkalihydroxid enthält.

8. Verfahren nach einem der Ansprüche 1 bis 7, **dadurch gekennzeichnet, dass** das Mahlhilfsmittel Caprolactam-Oligomere umfasst.

9. Verfahren nach einem der Ansprüche 1 bis 8, **dadurch gekennzeichnet, dass** es sich bei dem Rohstoff für die Zementherstellung um mindestens einen aus der Reihe Kalkstein, Kalksteinmergel, Ton, Kreide, Quarzsand und Eisenerz handelt.

10. Verfahren nach einem der Ansprüche 1 bis 9, **dadurch gekennzeichnet, dass** die Mahlung in einer Walzenschüsselmühle durchgeführt wird.

11. Anorganischer Feststoff aus der Reihe, Zementklinker, Puzzolan und/oder Rohstoff für die Zementherstellung, hergestellt nach einem Verfahren nach einem der Ansprüche 1 bis 10.

12. Verwendung einer Mischung enthaltend, bezogen auf die Trockenmasse,
6 bis 80 Gew.-% Caprolactam und
1,5 bis 30 Gew.-% Aminocapronsäure
als Mahlhilfsmittel für einen anorganischen Feststoff aus der Reihe, Zementklinker, Puzzolan und/oder Rohstoff für die Zementherstellung, wobei, jeweils bezogen auf die Trockenmasse, 0,002 bis 2 Gew.-% des Mahlhilfsmittels, bezogen auf den anorganischen Feststoff, eingesetzt wird, zur Verringerung der aufgewendeten Energie bei gleichem Mahlergebnis sowie zur Verringerung der Agglomerationsneigung des erhaltenen Produkts.

13. Mahlhilfsmittel für einen anorganischer Feststoff aus der Reihe, Zementklinker, Puzzolan und/oder Rohstoff für die Zementherstellung, enthaltend 6 bis 80 Gew.-% Caprolactam,
1,5 bis 30 Gew.-% Aminocapronsäure und
3 bis 70 Gew.-% mindestens eines weiteren Mahlhilfsmittels aus der Reihe Polycarboxylatether, Ligninsulfonat, Melaminformaldhydsulfonat, Naphtalinformaldehydsulfonat, Mono-, Di-, Tri- und Polyglykole, Polyalkohole, Alkanolamin, Aminosäuren, Zucker, Molasse, organische und anorganische Salze.
